# EUROPÄISCHE PATENTANMELDUNG

(11) **EP 1 331 166 A2**
(43) Veröffentlichungstag der Anmeldung: **30.07.2003**
(21) Anmeldenummer: 03000361.0
(22) Anmeldetag: 10.01.2003
(51) Int. Cl.: B62K 3/00, B62K 17/00, B62K 15/00

(54) **Rollfahrzeug**

(30) Priorität: 26.01.2002 DE 10202981
(71) Anmelder: Augustin, Klaus, 95179 Geroldsgrün (DE)
(72) Erfinder: Augustin, Klaus, 95179 Geroldsgrün (DE)
(74) Vertreter: Munk, Ludwig, Dipl.-Ing.

(57) **Zusammenfassung**

Es kommt ein Rollfahrzeug mit zwei Rädern (1, 2) in Vorschlag, denen jeweils eine mit einem Gabelträger (5, 6) zugeordnete Radgabel (3, 4) zugeordnet ist, wobei der vordere Gabelträger (5) als Lenkwelle und der hintere Gabelträger (6) als Steckzapfen ausgebildet sind. Der Fahrzeugrahmen (7) hat seitliche, den Gabelträgern (5, 6) zugeordnete Aufnahmerohre (9, 10). Ein Lenkbügel (24) ist wahlweise mittig an das obere Ende der Lenkwelle oder alternativ hierzu mit seinen Endbereichen an das obere Ende der Lenkwelle und das dem gegenüberliegenden Gabelträger (6) zugeordnete Aufnahmerohr (10) anschließbar. Hierzu sind Klemmeinrichtungen (14) vorgesehen.

## Beschreibung

Die Erfindung betrifft ein Rollfahrzeug.

Die bisher bekannten Rollfahrzeuge, beispielsweise Roller oder Caddys, dienen jeweils nur einem zugeordneten Spezialzweck und können jeweils nur für diesen Zweck Verwendung finden. So dienen Roller ausschließlich als Fortbewegungsmittel und Caddys ausschließlich als Transportmittel. Eine Verwendung für beide Zwecke ist bei den bekannten Anordnungen nicht möglich.

Hiervon ausgehend ist es daher die Aufgabe der vorliegenden Erfindung, ein Rollfahrzeug zu schaffen, das sowohl als Fortbewegungsmittel als auch als Transportmittel verwendbar ist.

Diese Aufgabe wird durch den Anspruch 1 gelöst. Hierdurch kommt ein Rollfahrzeug mit zwei Rädern in Vorschlag, denen jeweils eine Radgabel zugeordnet ist, die an einem Gabelträger angebracht ist, und das einen Rahmen aufweist, der im Bereich seiner Enden mit den Gabelträgern zugeordneten Aufnahmerohren versehen ist, wobei der vordere Gabelträger als drehbare Lenkwelle und der hintere Gabelträger als Einsteckzapfen ausgebildet sind, der in um 90° gegeneinander verdrehten Positionen fixierbar ist und wobei an das obere Ende der Lenkwelle und des dem Einsteckzapfen zugeoredneten, hinteren Aufnahmerohrs jeweils eine Klemmeinrichtung anschließbar ist und wobei ferner ein Lenkbügel vorgesehen ist, der wahlweise entweder mit seinem mittleren Bereich zum Eingriff mit der der Lenkwelle zugeordneten Klemmeinrichtung oder mit seinen Endbereichen zum Eingriff mit der der Lenkwelle zugeordneten Klemmeinrichtung und der dem hinteren Aufnahmerohr zugeordneten Klemmeinrichtung bringbar ist.

Diese Maßnahmen stellen sicher, dass die beiden Räder entweder mit quer zur Rahmenebene verlaufenden Achsen koplanar hintereinander oder mit in der Rahmenebene verlaufenden Achsen quer zur Rahmenebene nebeneinander gestellt werden können. Bei koplanar hintereinander gestellten Rädern wird der Lenkbügel nur mit der Lenkwelle verbunden, so dass sich ein lenkbares Fortbewegungsmittel mit koplanar hintereinander angeordneten Rädern ergibt. Bei koplanar zur Rahmenebene verlaufenden Achsen und quer zur Rahmenebene gestellten Rädern sowie mit beiden Klemmeinrichtungen verbundenem Lenkbügel ergibt sich ein caddyartiges Transportfahrzeug, wobei der beidseitig gehaltene Lenkbügel als Schub- bzw. Zuggriff fungiert und gleichzeitig zur Blockierung der Lenkwelle mit zugeordneter Radgabel gegen Verdrehung dient.

Vorteilhafte Ausgestaltungen und zweckmäßige Fortbildungen der übergeordneten Maßnahmen sind in den Unteransprüchen angegeben. So kann in einer vorteilhaften Ausgestaltung zusätzlich eine Sattelanordnung vorgesehen sein, die bei mit seinem mittleren Bereich mit der Lenkwelle verbundenem Lenkbügel zum Eingriff mit der dem hinteren Aufnahmerohr zugeordneten, höhenverstellbar anbringbaren Klemmeinrichtung bringbar ist. Die Sattelanordnung ergibt eine Sitzmöglichkeit und führt damit zu einem Laufrad bzw. Abfahrtsrad.

Eine weitere vorteilhafte Maßnahme kann darin bestehen, dass die Lenkwelle in einer Büchse gelagert und abgestützt ist, die das vordere Aufnahmerohr in axialer Richtung verstellbar durchgreift und gegenüber diesem in jeder Position fixierbar ist. Hierdurch wird sichergestellt, dass das Vorderrad stufenlos tiefer gestellt werden kann, so dass der Rahmen bei Talfahrten in einer etwa waagrechten Position gehalten werden kann, was bei der Verwendung des erfindungsgemäßen Fahrzeugs als Abfahrtsrad einen hohen Fahrkomfort und eine große Sicherheit gewährleistet. Mit Hilfe eines. Abfahrtsrads hier vorliegender Art lässt sich eine Talfahrt im Gebirge schnell und angenehm durchführen, wodurch bei Bergwanderungen etc. die Rückkehr ins Tal stark verkürzt werden kann.

In weiterer Fortbildung der übergeordneten Maßnahmen können die Aufnahmerohre als nach oben konvergierende, seitliche Rahmenholme ausgebildet sein. Die hierbei sich ergebende Schrägstellung der Aufnahmerohre ergibt einerseits einen vergleichsweise großen Radstand bei vergleichsweise kleiner Rahmenhöhe, so dass ein günstiges Verhältnis von Radstand zu Rahmenhöhe erreicht wird. Andererseits ergibt sich bei Verwendung als Caddy oben eine vergleichsweise kleine Rahmenbreite, wodurch die erforderliche Länge des dabei beidseits mit Klemmeinrichtungen zum Eingriff zu bringenden Schub- bzw. Zugbügels in Grenzen bleibt.

Vorteilhaft ist der Rahmen symmetrisch zu einer Mittelquerebene ausgebildet. Diese Symmetrie erleichtert die Handhabung als Caddy.

In einer weiteren vorteilhaften Ausgestaltung kann der Fahrzeugrahmen ein winkelhalbierend zwischen dem vorderen und hinteren Aufnahmerohr angeordnetes, mittleres Aufnahmerohr aufweisen, an dessen unteres Ende eine weitere Klemmeinrichtung anschließbar ist, die ein Stützorgan vorzugsweise in Form einer Fußstütze trägt. Die wahlweise anbringbare Fußstütze ermöglicht die Verwendung des erfindungsgemäßen Fahrzeugs als Roller und ergibt bei der Verwendung als Abfahrtsfahrzeug die Möglichkeit, die Füße zuverlässig abzustützen, was der Sicherheit zuträglich ist. Bei der Verwendung als Caddy kann die Fußstütze praktisch als Ladekonsole dienen, auf der eine Ladung, beispielsweise in Form eines Rucksacks oder dergleichen, abgestützt werden kann.

Zweckmäßig können die erwähnten Klemmeinrichtungen jeweils als zweiteilige Backenklemmen ausgebildet sein, die eine an einem Anschlussstutzen angebrachte Backe und eine an dieser zweckmäßig mittels einer Schnellspanneinrichtung lösbar anbringbare Backe aufweisen. Dies erleichtert den Umbau des erfindungsgemäßen Fahrzeugs von einem Fortbewegungsmittel zu einem Transportmittel und umgekehrt.

Eine weitere vorteilhafte Ausgestaltung kann darin bestehen, dass am Rahmen lösbar anbringbare Verlängerungsstücke zur Verlängerung der Anschlussstutzen der mit dem Lenkbügel zum Eingriff bringbaren Klemmeinrichtungen vorgesehen sind. Die Verlängerungsstücke ermöglichen in vorteilhafter Weise nicht nur die Verwirklichung eines großen Bodenabstands des Schub- bzw. Zugbügels bei Verwendung des erfindungsgemäßen Fahrzeugs als Caddy, sondern ermöglichen auch die Einstellung einer hohen Position der Sattelanordnung und des Lenkbügels, sofern dies bei Verwendung des erfindungsgemäßen Fahrzeugs als Transportmittel zur Steigerung des Fahrkomforts erwünscht sein sollte.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine schematische Ansicht des erfindungsgemäßen Rollfahrzeugs in der Darstellungsart einer Montageanleitungszeichnung,
- Figur 2: eine Ansicht des erfindungsgemäßen Rollfahrzeugs als Abfahrtsrad,
- Figur 3: eine Ansicht des erfindungsgemäßen Fahrzeugs als Caddy,
- Figur 4: eine Teilseitenansicht der Anordnung gemäß Figur 3,
- Figur 5: eine Ansicht des erfindungsgemäßen Rollfahrzeugs bei der Verwendung als Traggestell,
- Figur 6: eine Ansicht des erfindungsgemäßen Rollfahrzeugs bei der Verwendung als Laufrad,
- Figur 7: eine Ansicht des erfindungsgemäßen Rollfahrzeugs bei der Verwendung als Roller und
- Figur 8: eine Ansicht des erfindungsgemäßen Rollfahrzeugs bei der Verwendung als Auto-Gepäckträger.

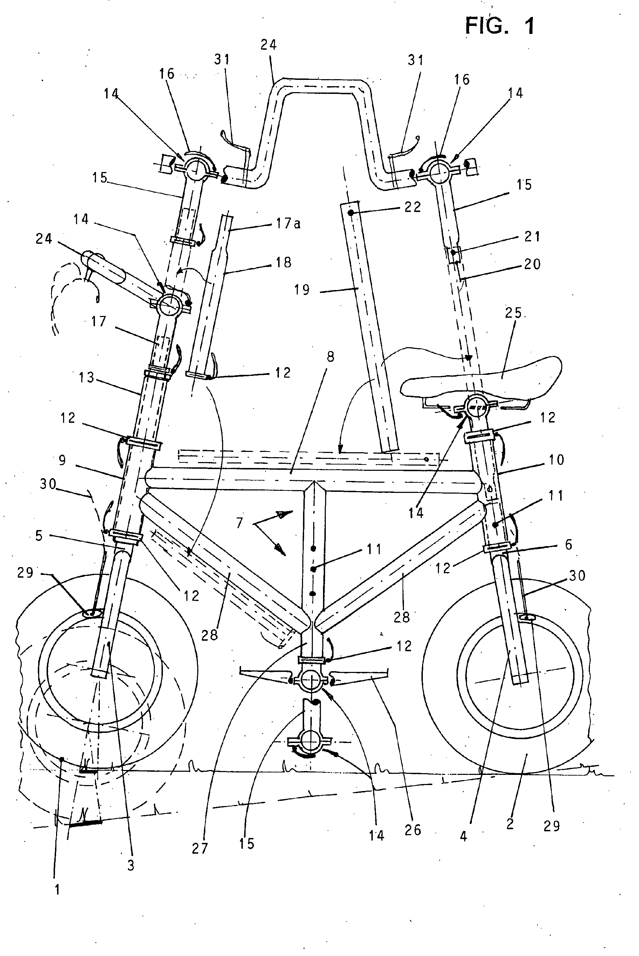

Das der Figur 1 zugrundeliegende Fahrzeug besitzt zwei antriebslose Räder 1, 2, die auf einer jeweils zugeordneten, hier nicht näher dargestellten Achse drehbar gelagert sind. Jede dieser Achsen ist auf einer zugeordneten Radgabel 3 bzw. 4 aufgenommen. Jede Radgabel 3 bzw. 4 ist an einem gegenläufig zu den die Achse aufnehmenden, parallelen Schenkeln verlaufenden, mittig zwischen den Schenkeln positionierten Gabelträger 5 bzw. 6 angebracht. Die Gabelträger 5 bzw. 6 sind auf einem in einer Ebene sich erstreckenden Rahmen 7 aufgenommen. Dieser enthält zwei durch eine Querstange 8 miteinander verbundene, seitliche Rahmenholme, die als den Gabelträgern 5 bzw. 6 zugeordnete Aufnahmerohre 9 bzw. 10 ausgebildet sind. Die Aufnahmerohre 9 bzw. 10 sind symmetrisch zu einer Mittelquerebene positioniert und verlaufen nach oben konvergierend.

Der Gabelträger 6 der dem Hinterrad 2 zugeordneten Radgabel 4 ist als Steckzapfen ausgebildet, der mit Drehfreiheitsgrad in das zugeordnete Aufnahmerohr 10 einsteckbar und gegenüber diesem in zwei um 90° gegeneinander verdrehten Positionen fixierbar ist. In der einen, in Figur 1 dargestellten Position verlaufen das Hinterrad 2 koplanar und dementsprechend die Radachse quer zur Ebene des Rahmens 7. In der um 90° hiergegen verdrehten Position verlaufen das Hinterrad 2 quer und die Radachse koplanar zur Rahmenebene.

Zur Fixierung des den Gabelträger 6 bildenden Steckzapfens in den genannten Drehstellungen ist ein Querstift 11 vorgesehen, der splintartig durch eine das Aufnahmerohr 10 und den Gabelträger 6 durchsetzende Durchgangsbohrung durchsteckbar ist. Der Gabelträger 6 oder das Aufnahmerohr 10 besitzen dementsprechend zwei um 90° gegeneinander versetzte, einander schneidende Bohrungen. Zusätzlich zu dieser formschlüssigen Fixierung kann eine kraftschlüssige Fixierung vorgesehen sein. Hierzu ist am unteren Ende des Aufnahmerohrs 10 eine Spanneinrichtung 12 vorgesehen, die schellenartig ausgebildet und mittels eines Schnellspannorgans betätigbar sein kann.

Der Gabelträger 5 der dem Vorderrad 1 zugeordneten Radgabel 3 ist als drehbar gelagerte Lenkwelle ausgebildet, die das zugeordnete Halterohr 9 durchgreift. Im dargestellten Beispiel durchgreift die genannte Lenkwelle eine zugeordnete Büchse 13, die die Lagerung der Lenkwelle enthält und ihrerseits längsverschiebbar im Aufnahmerohr 9 angeordnet ist. Die Länge der Büchse 13 ist größer als die Länge des zugeordneten Aufnahmerohrs 9, so dass sich ein axialer Stellweg ergibt. Zum Fixieren der stufenlos verstellbaren Büchse 13 in der gewünschten Position sind am oberen und unteren Ende des Aufnahmerohrs 9 ebenfalls Spanneinrichtungen 12 der oben bereits erwähnten Art vorgesehen.

Die erfindungsgemäße Anordnung enthält ferner an das obere Ende der den vorderen Gabelträger 5 bildenden Lenkwelle sowie des hinteren Aufnahmerohrs 10 anschließbare Klemmeinrichtungen 14. Diese sind als zweiteilige Backenklemmen ausgebildet, deren obere Backe lösbar an der unteren Backe festlegbar ist, die am oberen Ende eines mittels einer Steckverbindung an das jeweils zugeordnete Organ anschließbaren Anschlussstutzens 15 angebracht ist. Bei beiden Klemmeinrichtungen 14 verlaufen die Achsen der Anschlussstutzen koaxial zur Achse des jeweils zugehörigen Gabelträgers 5 bzw. 6. Zur Verbindung der beiden Backen der Klemmeinrichtungen 14 ist zweckmäßig ein Schnellspannorgan 16 vorgesehen. Ähnliche Schnellspannorgane können auch den Spanneinrichtungen 12 zugeordnet sein.

Die vorstehend genannten Klemmeinrichtungen 14 sind in Figur 1 zur Verdeutlichung der Darstellung in zwei verschiedenen Positionen gezeigt. Zunächst wird auf die untere Position eingegangen. Dabei ist der Anschlussstutzen 15 der dem hinteren Aufnahmerohr 10 zugeordneten Klemmeinrichtung 14 in das Aufnahmerohr 10 einsteckbar und in der gewünschten Position durch eine am oberen Ende des Aufnahmerohrs 10 angebrachte Spanneinrichtung 12 oben erwähnter Bauart fixierbar. Durch die Einstecktiefe ist die Höhe der Spanneinrichtung 14 wählbar. Die durch den vorderen Gabelträger 5 gebildete Lenkwelle ist am oberen Ende mit einem Steckzapfen 17 versehen, auf den der Anschlussstutzen 15 der zugeordneten Klemmeinrichtung 14 aufsteckbar ist. Zur Fixierung ist am unteren Ende des genannten Anschlusstutzens 15 eine Spanneinrichtung 12 oben erwähnter Art angebracht.

Die Anschlussstutzen 15 der beiden Klemmeinrichtungen 14 sind bei Bedarf durch zugeordnete Verlängerungsstücke 18 bzw. 19 verlängerbar, was zur vorstehend erwähnten oberen Position der Klemmeinrichtungen führt. Die Verlängerungsstücke 18, 19 sind, wie in Figur 1 mit unterbrochenen Linie angedeutet ist, solange sie nicht benötigt werden, lösbar am Rahmen 7 festgelegt, etwa durch Verwendung von Bändern oder Schellen oder dergleichen. Bei Bedarf werden die Verlängerungsstücke 18, 19 auf den jeweils zugeordneten Anschlussstutzen 15 aufgesteckt.

Das der vorderen Klemmeinrichtung 14 zugeordnete Verlängerungsstück 18 ist am oberen Ende mit einem dem Steckzapfen 17 der Lenkwelle entsprechenden Steckzapfen 17a und am unteren Ende mit einer Klemmeinrichtung 12 versehen. Der Steckzapfen 17 der durch den Gabelträger 5 gebildeten Lenkwelle kann in das Verlängerungsstück 18 eingreifen, dessen Steckzapfen 17a in den zugeordneten Anschlussstutzen 15 einsteckbar ist. Die Fixierung erfolgt mittels der genannten Spanneinrichtungen 12 am unteren Ende des Anschlussstutzens 15 und des Verlängerungsstücks 18.

Der Anschlussstutzen 15 der hinteren Klemmeinrichtung 14 ist am unteren Ende mit einem Steckzapfen 20 versehen, auf den das zugeordnete Verlängerungsstück 19 mit seinem oberen Ende aufsteckbar ist. Zur Fixierung kann dabei ein Querstift vorgesehen sein. Im dargestellten Beispiel soll eine Rasteinrichtung 21 vorgesehen sein, die beispielsweise eine mittels einer Feder in radialer Richtung beaufschlagte Kugel enthält, die in eine Bohrung 22 des Verlängerungsstücks 19 eingreifen kann.

Die erfindungsgemäße Anordnung enthält fernen einen Lenkbügel 24, der wie die Klemmeinrichtungen 14 in zwei Positionen gezeichnet ist, sowie einen Sattel 25. Dieser ist mittels der dem hinteren Aufnahmerohr 10 zugeordneten Klemmeinrichtung 14 in der gewünschten Position haltbar. Der Sattel 25 besitzt hierzu wenigstens ein zum Eingriff mit der zugeordneten Klemmeinrichtung 14 bringbares Halteorgan. Der Lenkbügel 24 ist wahlweise entweder mit seinem mittleren Bereich zum Eingriff mit der dem als Lenkwelle ausgebildeten, vorderen Gabelträger 5 zugeordneten, vorderen Klemmeinrichtung 14 oder mit seinen Endbereichen zum Eingriff mit der der Lenkwelle zugeordneten Klemmeinrichtung 14 und alternativ zum Sattel 25 mit der dem hinteren Aufnahmerohr 10 zugeordneten, hinteren Klemmeinrichtung 14 bringbar, deren Anschlussstutzen koaxial zum hinteren Gabelträger 6 ist.

Beim dargestellten Ausführungsbeispiel ist auch ein als Fußstütze 26 ausgebildetes Stützorgan 26 vorgesehen. Dieses enthält zwei gegenläufig von einem mittleren Tragstück abstehende Stützarme und ist mittels des genannten Tragstücks zum Eingriff mit einer zugeordneten Klemmeinrichtung 14 oben bereits erwähnter Bauart bringbar. Diese Klemmeinrichtung 14, die in Figur 1 ebenfalls in zwei Positionen gezeichnet ist, besitzt einen hier nach oben weisenden Anschlussstutzen 15, dem ein Aufnahmerohr 27 zugeordnet ist. Zur Bildung des Aufnahmerohrs 27 ist der Rahmen 7 mit einem winkelhalbierend zu den hinteren und vorderen Aufnahmerohren 9 bzw. 10 angeordneten, von der Querstange 8 nach unten abstehenden, mittleren Rahmenrohr versehen, in das der Anschlussstutzen 15 der vorstehend genannten Klemmeinrichtung 14 einsteckbar ist. Der untere Endbereich des mittleren Aufnahmerohrs 27 ist durch v-förmig gegeneinander angestellte Streben 28 mit den hinteren und vorderen Aufnahmerohren 9 bzw. 10 verbunden, was eine hohe Biege- und Verwindungssteifigkeit des Rahmens 7 sowie eine hohe Seitenstabilität des Aufnahmerohrs 27 ergibt.

Die Höhenposition des Stützorgans 26 ist durch Wahl der Einstecktiefe einstellbar. Zur Sicherung gegen Verdrehen und axiales Verschieben kann wie zur Sicherung des den hinteren Gabelträger 6 bildenden Steckzapfens ein durch eine das Aufnahmerohr 27 und den Anschlussstuzen 15 durchsetzende Bohrung splintartig durchsteckbarer Querstift 11 vorgesehen sein. Der Anschlussstutzen 15 oder das Aufnahmerohr 27 können dabei mit um 90° gegeneinander versetzen Bohrungen versehen sein, so dass das Stützorgang 26 so verstellbar ist, dass die Stützarme entweder quer zur Rahmenebene auskragen oder koplanar in der Rahmenebene liegen. Zur Erzielung einer stufenförmigen axialen Einstellbarkeit kann das Aufnahmerohr 27 mit mehreren, eine Bohrungsreihe bildenden Bohrungen versehen sein. Zusätzlich zur formschlüssigen Verbindung kann auch hier eine kraftschlüssige Verbindung vorgesehen sein. Hierzu ist das Aufnahmerohr 27 am unteren Ende mit einer Spanneinrichtung 12 oben erwähnter Bauart versehen.

Wenigstens einem Rad 1 bzw. 2 kann eine Bremseinrichtung 29 zugeordnet sein. Im dargestellten Beispiel ist beiden Rädern 1, 2 eine Bremseinrichtung 29 zugeordnet. Diese ist mittels eines Bowdenzugs 30 mit einer zugeordneten, am Lenkbügel 24 angebrachten Betätigungseinrichtung 31 verbunden. Der Bowdenzug 30 ist zweckmäßig so ausgebildet, dass er einfach abnehmbar ist.

Das erfindungsgemäße Fahrzeug kann beispielsweise als Hilfsmittel beim Bergwandern Verwendung finden. Bergauf kann das Fahrzeug als Caddy zum Transport von Ballast, wie eines Rucksacks, eines Kinds, eines Haustiers oder dergleichen Verwendung finden. Bergab kann das erfindungsgemäße Fahrzeug als Abfahrtsrad benutzt werden, mit dem der Benutzer am Abend eines Bergwandertags innerhalb kurzer Zeit zurück ins Tal rollen und damit die Abstiegszeit stark verkürzen kann, so dass mehr Zeit für den Bergaufenthalt bleibt.

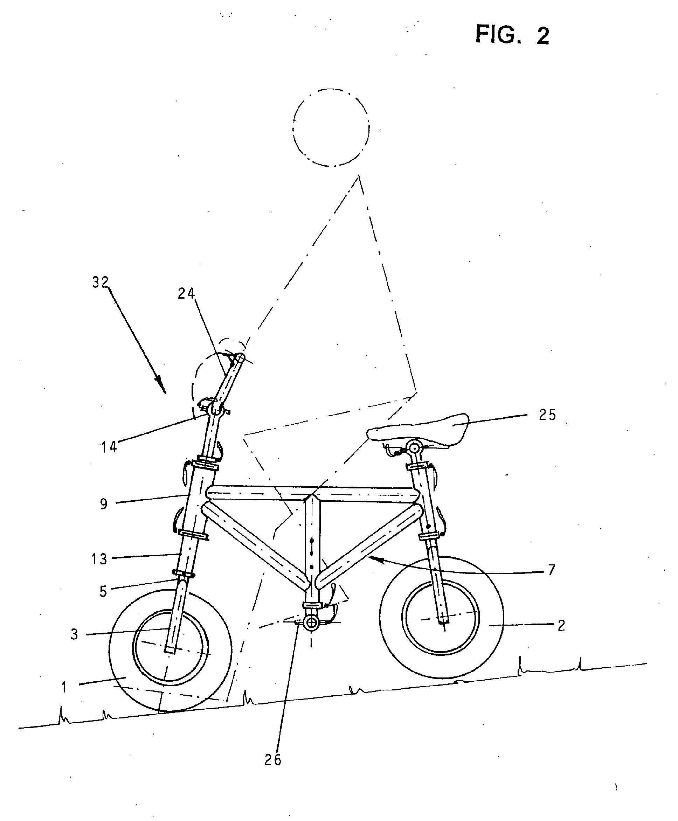

Die Figur 2 zeigt das erfindungsgemäße Fahrzeug als Abfahrtsrad 32. Zum Ausgleich des Gefälles ist dabei das Vorderrad 1 tiefer als das Hinterrad 2 gestellt. Hierzu wird die längsverschiebbar im vorderen Aufnahmerohr 9 aufgenommene, den der vorderen Radgabel 3 zugeordneten Gabelträger 5 lagernde Büchse 13 entsprechend nach unten verstellt. Im dargestellten Beispiel ist die Büchse 13 in die tiefste Position gebracht. Die Endstellungen der Büchse 13 wird durch an ihrem oberen und unteren Ende vorgesehene, auf die Stirnseiten des zugeordneten Aufnahmerohrs 9 auflaufende Anschläge vorgegeben. Durch Tieferstellen des Vorderrads 1 lässt sich der Rahmen 7 trotz des vorhandenen Gefälles in einer etwa waagrechten Position halten. Hierdurch verkleinert sich der durch einen Winkelpfeil angedeutete Lenkwinkel, was zu einer Vergrößerung des durch eine verdickte Linie angedeuteten Nachlaufs führt und damit einen guten Fahrkomfort ergibt. Der Sattel 25 kann bei der Verwendung als Abfahrtsrad 32 tief gestellt sein. Dasselbe gilt für den Lenkbügel 24. Die Verlängerungsstücke 18 bzw. 19 werden dabei nicht benutzt.

Der Lenkbügel 24 ist hierbei mit seinem mittleren Bereich im Eingriff mit der an das obere Ende der durch den Gabelträger 5 der vorderen Radgabel 3 gebildeten Lenkwelle angeschlossenen Klemmeinrichtung 14. Der Lenkbügel 24, der eine aus Figur 1 oben ersichtliche, etwa Ω-förmige Kontur hat, ist dabei so geschwenkt, dass er schräg nach oben weist, so dass seine Griffenden vergleichsweise hoch positioniert sind. Die Bowdenzüge 30 der Bremseinrichtungen 29 sind bei der Verwendung als Abfahrtsrad in Position gebracht, so dass die Bremseinrichtungen funktionsfähig sind.

Das als Fußstütze ausgebildete Stützorgan 26 ist hier in eine vergleichsweise hohe Position gebracht und so fixiert, dass die Stützarme quer zur Rahmenebene seitlich vorstehen und als Fußstütze benutzt werden können. Bei einfacher Schussfahrt können die Füße auf dem Stützorgan 26 abgestützt werden. In schwierigeren Situationen, wie in Kurven und bei sehr steilem Gelände können die Füße von der Fußstütze entfernt und als Brems- und Steuerhilfe benutzt werden. Diese Beinarbeit gewährleistet eine hohe Sicherheit.

Der Rahmen 7 und die Räder 1, 2 sind so dimensioniert, dass sich im ebenen Gelände ein Verhältnis zwischen Radstand zu Höhe des Gesamtschwerpunkts von etwa 1 ergibt. Der Radstand soll im bevorzugten Ausführungsbeispiel 700mm betragen. Dementsprechend soll auch der Gesamtschwerpunkt in ebenem Gelände auf einer Höhe von etwa 700 mm liegen. Durch Vor- bzw. Zurückneigen und Strecken der Beine ist hier eine vergleichsweise starke Schwerpunktverlagerung möglich, was einen hohen Fahrkomfort erlaubt.

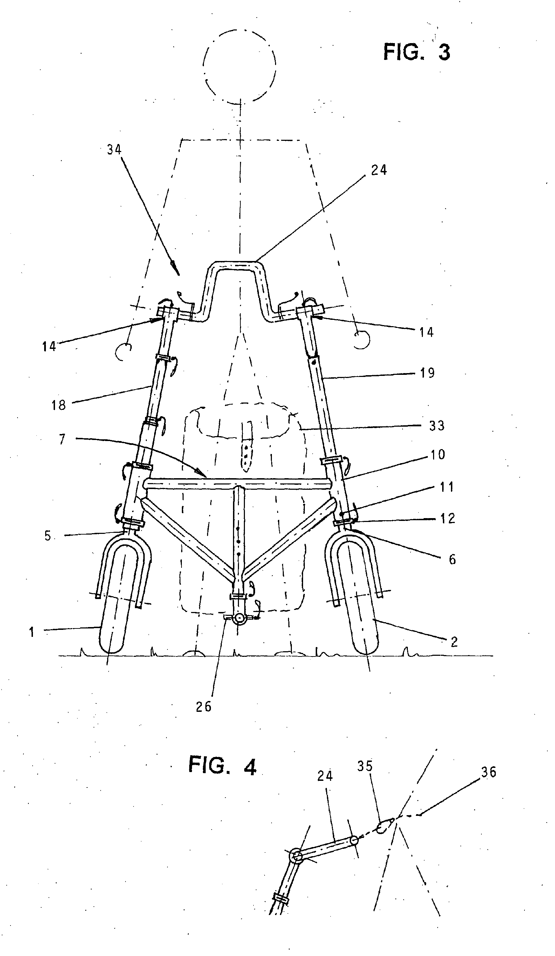

Eine Verwendung des erfindungsgemäßen Fahrzeugs als Caddy liegt den Figuren 3 und 4 zugrunde. Beim Umbau des erfindungsgemäßen Fahrzeugs von einem Abfahrtsrad vorstehend geschilderter Art oder dergleichen zu einem als ganzes mit 34 bezeichneten Caddy werden die beiden Räder 1, 2 auf gleiche Höhe gestellt und so gedreht, dass die Radachsen koplanar zur Ebene des Rahmens 7 sind. Hierzu werden der dem hinteren Gabelträger 6 zugeordnete Querstift 11 abgezogen, das Hinterrad 2 samt Radaufhängung gedreht und anschließend der Querstift 11 wieder eingesteckt. Der den Gabelträger 6 bildende Steckzapfen besitzt hierzu, wie weiter oben schon erwähnt wurde, zwei rechtwinklig zueinander verlaufende, radiale Durchgangsbohrungen, die mit einer zugeordneten Durchgangsbohrung des zugeordneten Aufnahmerohrs 10 zur Fluchtung gebracht werden können bzw. umgekehrt. Zum Drehen des Gabelträgers 6 muss selbstverständlich auch die am unteren Ende Aufnahmerohrs 10 vorgesehene Spanneinrichtung 12 geöffnet werden. Der Sattel 25 wird bei dieser Verwendung nicht benötigt und kann entweder im abgenommenen Zustand am Rahmen 7 lösbar festgelegt oder in einem Rücksack 33 etc. verstaut werden.

Der Lenkbügel 24 wird zunächst abgenommen und bei der vorliegenden Verwendung anschließend in nachstehend beschriebener Weise als Schub- bzw. Zuggriff eingesetzt. Hierzu werden die an den als Lenkwelle ausgebildeten Gabelträger 5 und an das hintere Aufnahmerohr 10 anschließbaren Klemmeinrichtung 14 unter Verwendung der zugeordneten Verlängerungsstücke 18 bzw. 19 am jeweils zugeordneten Organ angebracht. Anschließend wird der Lenkbügel 24 mit seinen seitlichen Endbereichen zum Eingriff mit den Klemmeinrichtungen 14 gebracht. Auf diese Weise ergibt sich ein auf Handhöhe positionierter Griffbügel, der als Schub- bzw. Zugbügel fungiert. Da die Aufnahmerohre 9, 10 nach oben konvergieren ergibt sich trotz eines für Verwendungen weiter oben geschilderter Art ausreichend großen Radstands im vorliegenden Fall ein kleinerer Abstand der zum Eingriff mit dem Lenkbügel 24 bringbaren Klemmeinrichtungen 14, so dass eine normale Klemmbügelbreite ausreicht, die kleiner als der Radstand ist.

Das oben erwähnte, auskragende Stützarme aufweisende Stützorgan 26 kann bei der vorliegenden Verwendung in einer Position sein, in der die Stützarme quer zur Rahmenebene auskragen. Die Stützarme können dabei in vorteilhafter Weise als Konsolen für auf dem Caddy 34 aufzunehmendes Gepäck fungieren. Im dargestellten Beispiel stützt sich der Rucksack 33 mit seinem Boden auf einem Stützarm des Stützorgans 26 ab. Der Rücksack 33 kann einfach auf den Rahmen 7 aufgelegt und durch Riemen etc. hieran gesichert werden. Für spezielle Transportaufgaben können selbstverständlich auch diesen angepasste, am Rahmen 7 festlegbare Aufnahmeeinrichtungen vorgesehen sein. So wäre es beispielsweise ohne Weiteres möglich, auf dem Rahmen 7 einen Kindersitz oder Haustiersitz zu befestigen. In einem derartigen Fall kann das Stützorgan 25 durch entsprechende Verdrehung so positioniert werden, dass die Stützarme parallel zur Rahmenebene verlaufen und dementsprechend als Fußstütze für die Füße eines Kindes etc. fungieren können.

Der in Figur 3 gezeigte Caddy 34 kann durch Ergreifen des hier als Griffbügel fungierenden Lenkbügels 34 geschoben oder gezogen werden. Es wäre aber auch denkbar, den Caddy 34, wie aus Figur 4 ersichtlich ist, mittels einer am genannten Griffbügel angreifenden, hier als Karabinerhaken ausgebildeten Kupplungseinrichtung 35 an einem von der Bedienungsperson getragenen Zuggurt 36 anzuhängen, bei dem es sich um den normalen Hosengürtel handeln kann. In einem derartigen Fall ergibt sich praktisch ein gezogener Nachläufer.

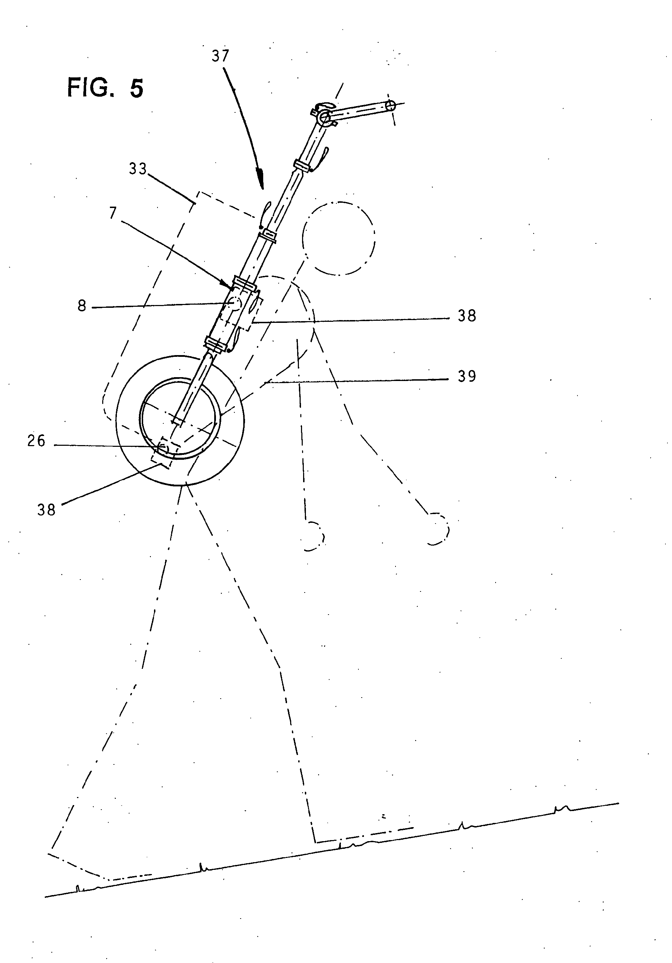

Sofern beim Aufstieg auf einen Berg etc. der Weg für den vorstehend beschriebenen Caddy zu schmal oder zu steinig werden sollte, kann das ganze Fahrzeug samt Ladung, wie aus Figur 5 ersichtlich ist, nach Art einer Rückentrage 37 auf dem Rücken getragen werden. Der Rahmen 7 fungiert dabei praktisch als Traggestell, das für den vorliegenden Einsatz mit zusätzlichen Rückenpolstern 38 ausgestattet wird. Diese können einfach an der Querstange 8 und am Stützorgan 26 angebracht werden, das dabei so gestellt wird, dass die Stützarme parallel zur Rahmenebene verlaufen. Bei den zum Tragen benötigten Traggurten 39 handelt es sich im dargestellten Beispiel um die Traggurte des auf dem Rahmen 7 aufgenommenen Rucksacks 33. Es wäre aber auch denkbar, am Rahmen 7 festlegbare Traggurte 39 als zusätzliche Ausstattung vorzusehen.

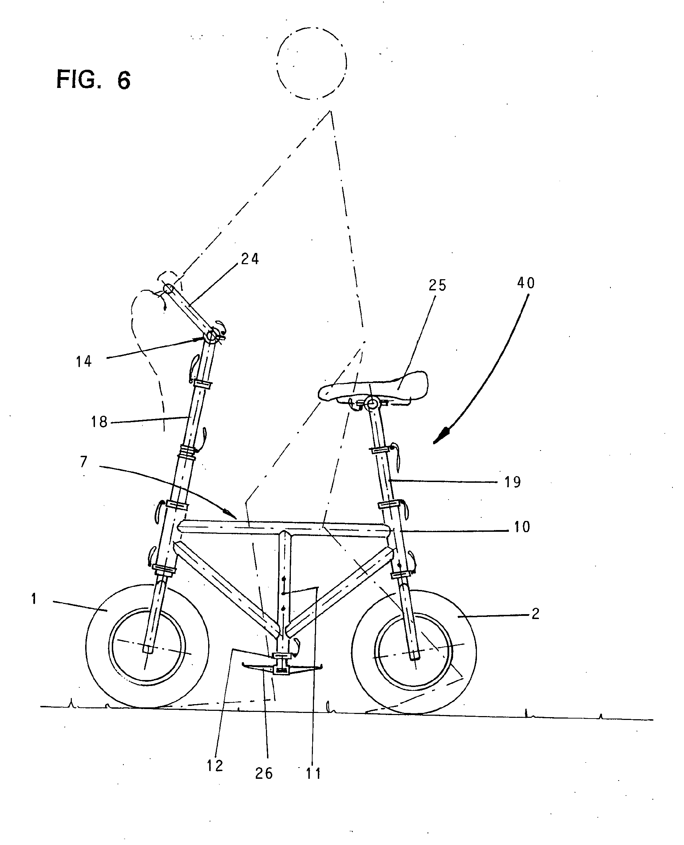

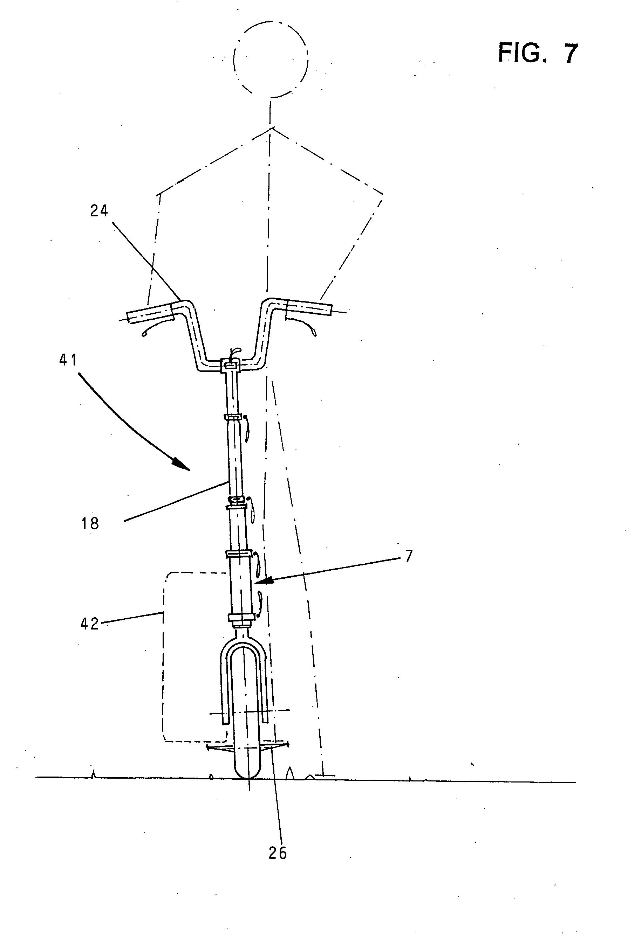

Die Verwendungsmöglichkeiten des erfindungsgemäßen Rollfahrzeugs beschränken sich nicht auf Bergtouren etc.. Vielmehr ist eine Verwendung auch im täglichen Leben zur Lösung von Mobilitätsproblemen möglich. Das gilt sowohl für die Verwendung als Caddy, der auch als Einkaufswagen etc. fungieren kann, als auch für die Verwendung als Fortbewegungsmittel. So kann das erfindungsgemäße Fahrzeug beispielsweise auch, wie Figur 6 zeigt, als Laufrad 40 oder, wie Figur 7 zeigt, als Roller 41 Verwendung finden.

Im Unterschied zum Abfahrtsrad 32 gemäß Figur 2 sind beim Laufrad 40 gemäß Figur 6 die Räder 1, 2 auf gleiche Höhe gebracht. Da hierbei keine Fußstützen benötigt werden ist das Stützorgan 26 so gestellt, dass die Stützarme parallel bzw. koplanar zur Ebene des Rahmens 7 sind. Zum Verdrehen des Stützorgans 26 werden der Stift 11 und die zugeordnete Spanneinrichtung 12 in der oben bereits geschilderten Weise betätigt. Der Sattel 25 ist dabei zweckmäßig unter Verwendung des zugeordneten Verlängerungsstücks 19 hochgestellt. Ebenso ist der Lenkbügel 24 unter Verwendung des Verlängerungsstücks 18 hochgestellt. Zweckmäßig ist hierbei der mit seinem mittleren Bereich zum Eingriff mit der zugeordneten Klemmeinrichtung 14 gebrachte Lenkbügel 24 nach vorne geschwenkt. Die Sattelhöhe kann durch Wahl der Eingriffstiefe des Verlängerungsstücks 19 in das zugeordnete Aufnahmerohr 10 individuell eingestellt werden. Die Höhe des Lenkbügels 24 kann durch geeignete Schwenkstellung eingestellt werden.

Bei der Verwendung des erfindungsgemäßen Fahrzeugs in Form des der Figur 7 zugrundeliegenden Rollers 41 wird der Sattel 25 nicht benötigt und kann daher abgenommen werden. Der Lenkbügel 24 befindet sich dabei in der mittels des Verlängerungsstücks 18 hochgestellten Position. Das Stützorgan 26 ist dabei wiederum so gestellt, dass die Stützarme quer zur Rahmenebene auskragen, so dass der Benutzer mit einem Fuß auf eine Fußstütze treten kann. Bei seitlichem Stand des Benutzers, wie in Figur 7 angedeutet, wird der dem Benutzer zugewandte Stützarm als Fußstütze benötigt. Der gegenüberliegende Stützarm kann dabei als Konsole für eine Tasche 42 etc. Verwendung finden. Alternativ zum seitlichen Stand des Benutzers wäre selbstverständlich auch ein mittiger Stand denkbar, bei dem sich die Beine des Benutzers links und rechts vom Rahmen 7 befinden.

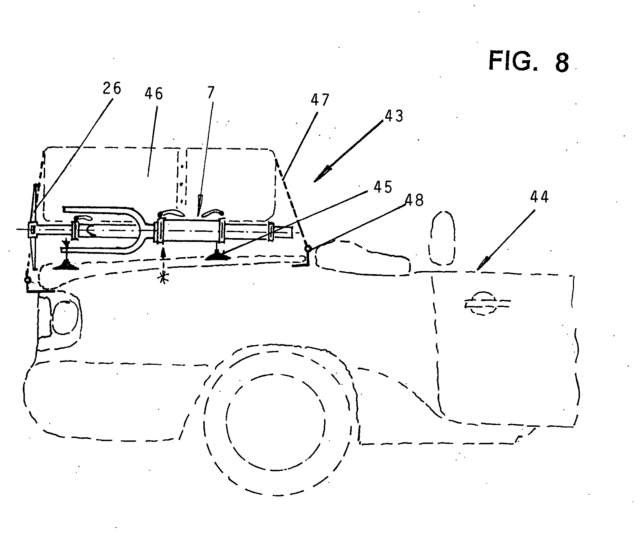

Eine weitere Verwendung des erfindungsgemäßen Fahrzeugs als Gepäckträger 43 liegt der Figur 8 zugrunde. Dabei ist der Rahmen 7 liegend auf dem Kofferraumdeckel eines Kraftfahrzeugs 44 angeordnet.

Hierzu sind dem Rahmen 7 mit jeweils einem Saugnapf versehene Haltefüße 45 zugeordnet, an denen der Rahmen 7 fixierbar ist. Das Gepäck 46 wird auf die Oberseite des liegenden Rahmens 7 aufgelegt und durch Spanngurte 47 gesichert, die an ihren Enden mit Einhängklauen 48 zum Einhängen am Rand des Kofferraumdeckels versehen sind. Das Stützorgan 26 kann dabei zweckmäßig so gestellt werden, dass es als rückwärtiger Anschlag für das Gepäck 46 fungiert. Sofern ein Gepäckträger 43 hier vorliegender Art nicht benötigt wird, kann das erfindungsgemäße Fahrzeug selbstverständlich im Kofferraum eines Kraftfahrzeugs transportiert werden.

Vorstehend sind ein bevorzugter Aufbau und bevorzugte Verwendungsarten des erfindungsgemäßen Fahrzeugs näher erläutert, ohne dass jedoch hiermit eine Beschränkung verbunden sein soll. Vielmehr stehen dem Fachmann eine Reihe von Möglichkeiten zur Verfügung, um das dem erfindungsgemäßen Fahrzeug zugrundeliegende Bauprinzip an die Verhältnisse des Einzelfalls anzupassen.

## Patentansprüche

1. Rollfahrzeug mit zwei Rädern (1, 2), denen jeweils eine Radgabel (3, 4) zugeordnet ist, die an einem Gabelträger (5, 6) angebracht ist, und mit einem Rahmen (7), der im Bereich seiner Enden mit den Gabelträgern (5, 6) zugeordneten Aufnahmerohren (9, 10) versehen ist, wobei der vordere Gabelträger (5) als drehbare Lenkwelle und der hintere Gabelträger (6) als Einsteckzapfen ausgebildet sind, der in um 90° gegeneinander verdrehten Positionen fixierbar ist, und wobei an das obere Ende des als Lenkwelle ausgebildeten Gabelträgers (5) und des dem als Einsteckzapfen ausgebildeten Gabelträgers (6) zugeordneten Aufnahmerohrs (10) jeweils eine Klemmeinrichtung (14) anschließbar ist und wobei ein Lenkbügel (24) vorgesehen ist, der wahlweise entweder mit seinem mittleren Bereich zum Eingriff mit der der Lenkwelle zugeordneten Klemmeinrichtung (14) oder mit seinen Endbereichen zum Eingriff mit der der Lenkwelle zugeordneten Klemmeinrichtung (14) und der dem lenkwellenfernen Aufnahmerohr (10) zugeordneten Klemmeinrichtung (14) bringbar ist.

2. Rollfahrzeug nach Anspruch 1, **dadurch gekennzeichnet, dass** eine Sattelanordnung (25) vorgesehen ist, die bei mit seinem mittleren Bereich mit der Lenkwelle verbundenem Lenkbügel (24) zum Eingriff mit der dem hinteren Aufnahmerohr (10) zugeordneten Klemmeinrichtung (14) bringbar ist, die höhenverstellbar angeordnet ist.

3. Rollfahrzeug nach einem der vorhergehenden Ansprüche, **dadurch gekennzeichnet, dass** der als Lenkwelle ausgebildete Gabelträger (5) in einer Büchse (13) gelagert und abgestützt ist, die das zugeordnete Aufnahmerohr (9) in axialer Richtung verstellbar durchgreift und gegenüber dem Aufnahmerohr (9) fixierbar ist.

4. Rollfahrzeug nach einem der vorhergehenden Ansprüche, **dadurch gekennzeichnet, dass** die Aufnahmerohre (9, 10) als nach oben konvergierende, seitliche Rahmenholme des vorzugsweise symmetrisch zu einer Mittelquerebene ausgebildeten Rahmens (7) ausgebildet sind, der vorzugsweise auch ein winkelhalbierend zwischen den seitlichen Aufnahmerohren (9,10) angeordnetes, mittleres Aufnahmerohr (27) aufweist, wobei vorzugsweise an den freien Enden der Aufnahmerohre (9, 10, 27) Spanneinrichtungen (12) angebracht sind und wobei vorzugsweise am unteren Ende des mittleren Aufnahmerohrs (27) eine weitere Klemmeinrichtung (14) anschließbar ist, auf der ein vorzugsweise einander gegenüberliegende, als Fußstützen ausgebildete Stützarme aufweisendes Stützorgan (26) aufnehmbar ist und die in der Höhe einstellbar und in um 90° gegeneinander verdrehten Positionen fixierbar ist.

5. Rollfahrzeug nach Anspruch 4, **dadurch gekennzeichnet, dass** der Rahmen (7) eine die seitlichen Aufnahmerohre (9, 10) verbindende Querstange (8) aufweist, von der das mittlere Aufnahmerohr (27) nach unten absteht, dessen unterer Endbereich durch v-förmig gegeneinander geneigte Streben (28) mit den seitlichen Aufnahmerohren (9, 10) verbunden ist.

6. Rollfahrzeug nach einem der vorhergehenden Ansprüche, **dadurch gekennzeichnet, dass** die Klemmeinrichtungen (14) als zweiteilige Backenklemmen ausgebildet sind, die eine an einem Anschlussstutzen (15) angebrachte Backe und eine an dieser mittels einer Schnellspanneinrichtung lösbar anbringbare Backe aufweisen, wobei vorzugsweise den Anschlussstutzen (15) der vorderen und hinteren Klemmeinrichtungen (14) jeweils ein wahlweise einsetzbares Verlängerungsstück (18 bzw. 19) zugeordnet ist.

7. Rollfahrzeug nach einem der vorhergehenden Ansprüche, **dadurch gekennzeichnet, dass** zur Fixierung des dem Hinterrad (2) zugeordneten, hinteren Gabelträgers (6) und/oder des Anschlussstutzens (15) der die Stützeinrichtung (26) tragenden Klemmeinrichtung (14) jeweils ein durchgehender Querstift (11) vorgesehen ist.

8. Rollfahrzeug nach einem der vorhergehenden Ansprüche, **dadurch gekennzeichnet, dass** am oberen Ende des als Lenkwelle ausgebildeten Gabelträgers (5) ein Steckzapfen (17) angebracht ist, auf den der Anschlussstutzen (15) der zugeordneten Klemmeinrichtung (14) bzw. das zugehörige Verlängerungsstück (18) aufsteckbar und hieran mittels einer Spanneinrichtung (12) festlegbar ist.

9. Rollfahrzeug nach einem der vorhergehenden Ansprüche, **dadurch gekennzeichnet, dass** am unteren Ende des Anschlußstutzens (15) der hinteren Klemmeinrichtung (14) ein Steckzapfen (20) vorgesehen ist, auf den das zugeordnete Verlängerungsstück (19) bei Bedarf aufsteckbar ist, wobei eine Fixierung mittels einer Rastanordnung (21, 22) vorgesehen ist.

10. Rollfahrzeug nach einem der vorhergehenden Ansprüche, **dadurch gekennzeichnet, dass** wenigstens einem Rad (1 bzw. 2) eine Bremseinrichtung (29) zugeordnet ist, die über einen Bowdenzug (30) mit einer am Lenkbügel (24) anbringbaren Betätigungseinrichtung (31) verbindbar ist.
